# EUROPEAN PATENT APPLICATION

(11) **EP 4 840 538 A1**
(43) Date of publication of application: **18.11.2026**
(21) Application number: 24916981.4
(22) Date of filing: 03.12.2024
(51) Int. Cl.: B01J 20/18

(54) **ADSORBENT AND METHOD FOR MANUFACTURING SAME**

(30) Priority: 10.01.2024 EP 24382015
(71) Applicant: CATALER CORPORATION, Kakegawa-shi, Shizuoka 437-1492 (JP)
(72) Inventor: TRAN, Huong Mai, Kakegawa-shi, Shizuoka 437-1492 (JP); MUKAI, Sadaatsu, Kakegawa-shi, Shizuoka 437-1492 (JP); CORMA-CARNOS, Avelino, Valencia 46022 (ES); MOLINER-MARIN, Manuel, Valencia 46022 (ES)
(74) Representative: Ricker, Mathias
(86) International application number: PCT/JP2024/042647
(87) International publication number: WO 2025/150296

(57) **Abstract**

Provided is an adsorbent having a core-shell structure, wherein the core is configured from a zeolite; the shell meets the following requirements (A)-(C), i.e., (A) the shell is a silicate or is a silicate-based oxide configured from an aluminosilicate in which the molar ratio SiO₂/Al₂O₃ is 750 or higher, (B) the shell has a zeolite structure, and (C) all ratios (I_{Si-OH}/I_{Si-O}) of the peak intensity I_{Si-OH} of Si-OH peaks ((3,788±50) cm⁻¹) to the peak intensity I_{Si-O} of Si-O peaks ((1,868±70) cm⁻¹) are equal to or less than 3.0; and the structure of the zeolite constituting the core and the structure of the zeolite constituting the shell do not have a shared composite structural unit.

## Description

### FIELD

The present invention relates to an adsorbent and a method for the production thereof. Specifically, it relates to an adsorbent which is suitable for adsorbing CO₂, and a method for the production of this adsorbent.

### BACKGROUND

In the field of exhaust gas purification and carbon neutral field, adsorbents which adsorb specific adsorption target substances are used.

For example, FAU zeolite is known as a CO₂ adsorbent material. However, FAU zeolite has a problem in that when water is also present in the atmosphere, competitive adsorption between CO₂ and water occurs, resulting in a decrease in the amount of CO₂ adsorbed.

In order to solve this problem, attempts have been made to create composite particles by using a zeolite core having gas adsorption ability and surrounding the zeolite core with a shell having hydrophobicity and gas diffusivity.

For example, Non-Patent Literature 1 describes composite particles in which a zeolite 13X core is covered by a silicalite shell. Non-Patent Literature 2 describes composite particles in which a Na-Y zeolite core is covered by a silicalite shell.

### [CITATION LIST]

### [NON-PATENT LITERATURE]

[NPL 1] Mater. Chem. Phys., 2012 (133), pp. 1144-1151
[NPL 2] Ind. Eng. Chem. Res., 2018 (57), pp. 16358-16366

### SUMMARY

### [TECHNICAL PROBLEM]

It is expected that core-shell zeolite materials can serve as adsorbents in which the adsorption amount of the adsorption target substance is not reduced even when water is also present in the atmosphere. However, core-shell zeolite materials obtained in the prior art have an insufficient shell coverage rate, many Si-OH bonds are present on the shell surface, and the hydrophobicity thereof is insufficient.

In this regard, Non-Patent Literature 1 describes that hydrophobicity is improved by silylating the surface of the composite particles. However, surface-silylated composite particles have low heat resistance, and their applications are limited.

The present invention was conceived in view of the above circumstances. An object of the present invention is to provide an adsorbent which suppresses a decrease in the adsorption amount of an adsorption target substance in the presence of water, and which has a high heat resistance, as well as a method for the production of this adsorbent.

### [SOLUTION TO PROBLEM]

The present invention is as described below.

### <<Aspect 1>>

An adsorbent having a core-shell structure, wherein
the core is composed of a zeolite, and
the shell satisfies all of the following requirements (A) to (C): the shell
   (A) being a silicate-based oxide composed of a silicate or an aluminosilicate having an SiO2/Al2O3 molar ratio of 750 or more;
   (B) having a zeolite structure; and
   (C) having a ratio (I_{Si-OH}/I_{Si-O}) of a peak intensity I_{Si-OH} of an Si-OH peak ((3,788 ± 50) cm-1) to a peak intensity I_{Si-O} of an Si-O peak ((1,868 ± 70) cm-1) of 3.0 or less in FT-IR of the adsorbent, and
a structure of the zeolite constituting the core and a structure of the zeolite constituting the shell do not have a shared composite building unit.

### <<Aspect 2>>

The adsorbent according to Aspect 1, wherein the zeolite constituting the core has an SiO₂/Al₂O₃ molar ratio of 20 or less.

### <<Aspect 3>>

The adsorbent according to Aspect 1 or 2, wherein the zeolite constituting the core has a skeletal structure selected from FAU, AEI, and CHA.

### <<Aspect 4>>

The adsorbent according to any one of Aspects 1 to 3, wherein an adsorption target substance of the adsorbent is CO₂.

### <<Aspect 5>>

The adsorbent according to any one of Aspects 1 to 4, wherein an alkali metal or an alkaline earth metal is supported on the zeolite constituting the core.

### <<Aspect 6>>

The adsorbent according to any one of Aspects 1 to 5, wherein the silicate-based oxide constituting the shell has an MFI skeletal structure.

### <<Aspect 7>>

The adsorbent according to any one of Aspects 1 to 6, wherein a coverage rate of the shell is 75% or more.

### <<Aspect 8>>

A method for the production of the adsorbent according to any one of Aspects 1 to 7, the method comprising the steps of:
contacting a core composed of a zeolite and a silicate-based oxide composed of a silicate or an aluminosilicate having an SiO₂/Al₂O₃ molar ratio of 750 or more;
depositing a seed shell composed of the silicate-based oxide on a surface of the core to synthesize an adsorbent precursor; and
heating the adsorbent precursor in the presence of a silicate-based oxide source and an organic structure directing agent to grow crystals of the shell.

### <<Aspect 9>>

The method for the production of an adsorbent according to Aspect 8, wherein the synthesis of the adsorbent precursor is performed by spray drying a mixture of the core and the silicate-based oxide.

### <<Aspect 10>>

The method for the production of an adsorbent according to Aspect 8, wherein the synthesis of the adsorbent precursor is performed by heating a mixture of the core and the silicate-based oxide.

### [ADVANTAGEOUS EFFECTS OF INVENTION]

According to the present invention, there is provided an adsorbent which suppresses a decrease in the adsorption amount of an adsorption target substance in the presence of water, and which has a high heat resistance, as well as a method for the production of this adsorbent.

### BRIEF DESCRIPTION OF DRAWINGS

FIG. 1(a) is an FE-SEM image of the Na-FAU (FAU core) used as a raw material in Example 1, and FIG. 1(b) is an FE-SEM image of the core-shell FAU-MFI composite obtained in Example 1.
FIG. 2 is an SEM image of the core-shell FAU-MFI composite obtained in Example 1.
FIG. 3 is an FE-SEM image of the core-shell FAU-MFI composite precursor obtained in Comparative Example 1.
FIG. 4 is an FT-IR chart measured for the FAU core and the sample of Example 1 60 seconds after the start of the flow of the hydrous nitrogen gas flow.
FIG. 5 is a graph showing changes over time in water adsorption rates measured for each of the FAU-MFI composites obtained in Examples 1 and 3 and Comparative Examples 1 and 2.

### DESCRIPTION OF EMBODIMENTS

### <<Adsorbent>>

The adsorbent of the present invention is:
an adsorbent having a core-shell structure, wherein
the core is composed of a zeolite, and
the shell satisfies all of the following requirements (A) to (C): the shell
   (A) being a silicate-based oxide composed of a silicate or an aluminosilicate having an SiO₂/Al₂O₃ molar ratio of 750 or more;
   (B) having a zeolite structure; and
   (C) having a ratio (I_{Si-OH}/I_{Si-O}) of a peak intensity I_{Si-OH} of an Si-OH peak ((3,788 ± 50) cm⁻¹) to a peak intensity I_{Si-O} of an Si-O peak ((1,868 ± 70) cm⁻¹) of 3.0 or less in FT-IR of the adsorbent, and
a structure of the zeolite constituting the core and a structure of the zeolite constituting the shell do not have a shared composite building unit.

The core of the adsorbent of the present invention is composed of a zeolite. This is advantageous as the core of an adsorbent since the aluminosilicate constituting the zeolite is generally suitable for gas adsorption and the optimal pore diameter for adsorption of the adsorption target substance can be selected by selecting the skeletal structure thereof.

The shell of the adsorbent of the present invention is constituted by a silicate-based oxide composed of a silicate or an aluminosilicate having an SiO₂/Al₂O₃ molar ratio of 750 or more. Specifically, the shell of the adsorbent has a very low content of elemental aluminum or does not contain elemental aluminum. Such shells are highly hydrophobic. The adsorbent of the present invention, which has a highly hydrophobic shell, can adsorb an adsorption target substance in a desired adsorption amount even in the presence of water. "SiO₂/Al₂O₃ molar ratio" means the molar ratio (SiO₂/Al₂O₃) of silica (SiO₂) to alumina (Al₂O₃).

The shell has a zeolite structure. The zeolite structure has pores. In the adsorbent of the present invention, which has a shell having pores, since the gas containing the adsorption target substance can easily pass through the shell, the degree of hindrance of the adsorption of the adsorption target substance due to the presence of the shell is small.

The adsorbent of the present invention exhibits a small value of 3.0 or less as the ratio (I_{Si-OH}/I_{Si-O}) of the peak intensity I_{Si-OH} of the Si-OH peak ((3,788 ± 50) cm⁻¹) to the peak intensity I_{Si-O} of the Si-O peak ((1,868 ± 70) cm⁻¹) in FT-IR. A small value of the ratio (I_{Si-OH}/I_{Si-O}) means that the concentration of Si-OH groups in the shell is low and the shell is highly hydrophobic. In the adsorbent of the present invention, since the ratio (I_{Si-OH}/I_{Si-O}) is as small as 3.0 or less, the shell has high hydrophobicity. Thus, the adsorbent of the present invention has the advantage that even in the presence of water, competitive adsorption between the adsorption target substance and water is suppressed, whereby the hindrance of the adsorption amount of the adsorption target substance is small.

The elements constituting the adsorbent of the present invention will be described in order below.

### <Core>

The core of the adsorbent of the present invention has the function of adsorbing an adsorption target substance. The core is composed of a zeolite. Zeolites have excellent adsorption ability and are thus most suitable as the core of the adsorbent of the present invention.

The SiO₂/Al₂O₃ molar ratio of the zeolite constituting the core may be 0.5 or more, 1.0 or more, 1.5 or more, or 2.0 or more in order to increase durability, and may be 500 or less, 300 or less, 100 or less, 80 or less, 40 or less, 20 or less, 10 or less, or 5.0 or less in order to increase the adsorption amount of the adsorption target substance.

The skeletal structure of zeolite is assigned a skeletal code consisting of three capital letters by the International Zeolite Association. Herein, a zeolite having a certain skeletal structure may be referred to by the skeletal code indicating the skeletal structure. Ion-exchanged zeolite is sometimes referred to by a notation that combines the ionic species and the skeleton code with a hyphen. For example, a zeolite having a skeletal structure represented by the skeleton code FAU is sometimes written as "FAU", and FAU ion-exchanged with Na is sometimes written as "Na-FAU".

The pore diameter of the zeolite may be described herein. This pore diameter is a value described as "Maximum diameter of a sphere that can diffuse along" in the zeolite structure database (URL: https://asia.iza-structure.org/IZA-SC/ftc_table.php) publicly available from the International Zeolite Association. If the values differ in the a-axis, b-axis, and c-axis directions, the largest pore diameter among these pore diameters is adopted. In this database, for example, the pore diameters of AFI are described as a-axis: 2.22 angstrom, b-axis: 2.22 angstrom, and c-axis: 7.42 angstrom. Herein, the maximum value of "7.42 angstrom" is regarded as the pore diameter of AFI.

The skeletal structure of the zeolite constituting the core of the adsorbent of the present invention may be appropriately selected in accordance with the adsorption target substance. The adsorption target substance may be, for example, CO₂. In this case, the zeolite of the core may be one or more selected from AFI, ATO, BEA, CHA, CON, FAU, GME, LTA, LTL, MOR, MTW, AFX, AEI, MFI, and OFF.

When the adsorption target substance is CO₂, the pore diameter of the zeolite of the core may be 3.5 angstrom or more, 4.0 angstrom or more, 5.0 angstrom or more, 6.0 angstrom or more, 7.0 angstrom or more, or 7.2 angstrom or more, and may be 10.0 angstrom or less, 9.0 angstrom or less, or 8.0 angstrom or less. When the adsorption target substance is CO₂, the zeolite of the core may be one or more selected from AFI, CHA, FAU, AEI, GME, LTA, LTL, MFI, MOR, and OFF, and in particular, may be one or more selected from FAU, AEI, and CHA.

When the adsorption target substance is CO₂, the zeolite of the core may support an alkali metal or an alkaline earth metal. Zeolites supporting alkali metals or alkaline earth metals have a high basicity, and therefore have the advantage of increasing the adsorption amount of CO₂.

The particle size of the zeolite constituting the core in the adsorbent of the present invention may be 1.0 µm or more, 1.2 µm or more, 1.5 µm or more, or 2.0 µm or more, and may be 5.0 µm or less, 4.0 µm or less, 3.5 µm or less, or 3.0 µm or less. This particle size is the number average particle size obtained from microscopic observation.

### <Shell>

The shell of the adsorbent of the present invention has the function of imparting hydrophobicity to the adsorbent, protecting the zeolite of the core from moisture, and allowing the adsorption target substance to pass through to the core.

The shell satisfies all of the following requirements (A) to (C). The shell
(A) being a silicate-based oxide composed of a silicate or an aluminosilicate having an SiO₂/Al₂O₃ molar ratio of 750 or more;
(B) having a zeolite structure; and
(C) having a ratio (I_{Si-OH}/I_{Si-O}) of a peak intensity I_{Si-OH} of an Si-OH peak ((3,788 ± 50) cm⁻¹) to a peak intensity I_{Si-O} of an Si-O peak ((1,868 ± 70) cm⁻¹) of 3.0 or less in FT-IR of the adsorbent.

Requirements (A) to (C) that should be satisfied by the shell of the adsorbent will be described in order below.

### (A) Being a silicate-based oxide composed of a silicate or an aluminosilicate having an SiO₂/Al₂O₃ molar ratio of 750 or more

The shell of the adsorbent is a silicate-based oxide composed of a silicate or an aluminosilicate having an SiO₂/Al₂O₃ molar ratio of 750 or more.

Since the shell of the adsorbent is composed of such a silicate-based oxide, it is ensured that the adsorbent has high hydrophobicity and has pores, as described above. The adsorbent of the present invention including such a shell has the advantage of being able to adsorb the adsorption target substance in a desired adsorption amount even in the presence of water.

In order to fulfill the above purpose, when the silicate-based oxide is an aluminosilicate, the SiO₂/Al₂O₃ molar ratio thereof is 750 or more, and may be 1,000 or more, 1,500 or more, 2,000 or more, 2,500 or more, 3,000 or more, 4,000 or more, or 5,000 or more.

### (B) Having a zeolite structure

The shell of the adsorbent has a zeolite structure.

Since zeolites have a pore structure, the adsorption target substance can efficiently pass through to the core. By selecting the pore diameter, it may be possible to deliver only a specific adsorption target substance to the core.

The pore diameter of the silicate-based oxide constituting the shell may be 3.0 angstrom or more, 3.5 angstrom or more, or 4.0 angstrom or more, and 8.0 angstrom or less, 7.0 angstrom or less, 6.0 angstrom or less, or 5.0 angstrom or less.

The zeolite structure of the silicate-based oxide constituting the shell may be, for example, AEL, EUO, FER, HEU, MEL, MFI, NES, TON, or WEI, and may have one or more skeletal structures selected from these.

In particular, the shell of the adsorbent of the present invention may be a silicate-based oxide having an MFI skeletal structure.

### (C) Having a ratio (I_{Si-OH}/I_{Si-O}) of a peak intensity I_{Si-OH} of an Si-OH peak ((3,788 ± 50) cm⁻¹) to a peak intensity I_{Si-O} of an Si-O peak ((1,868 ± 70) cm⁻¹) of 3.0 or less in FT-IR of the adsorbent

The ratio (I_{Si-OH}/I_{Si-O}) of the adsorbent of 3.0 or less means that the amount of Si-OH groups in the shell is small. This indicates that the shell has high hydrophobicity, which allows the adsorbent of the present invention to exhibit high adsorption ability even in the presence of water.

The ratio (I_{Si-OH}/I_{Si-O}) may be 2.8 or less, 2.6 or less, 2.4 or less, 2.2 or less, 2.0 or less, or 1.8 or less. The ratio (I_{Si-OH}/I_{Si-O}) may be zero (0), but in relation to the effects brought about by the present invention, it is sufficient that the ratio (I_{Si-OH}/I_{Si-O}) be 0.5 or more, 1.0 or more, or 1.5 or more.

The FT-IR of the adsorbent may be measured by a transmission method in accordance with JIS K0117:2017 (General Rules for Infrared Spectrophotometric Analysis).

In the adsorbent of the present invention, the coverage rate of the shell may be 75% or more. By setting the coverage rate of the shell to 75% or more, the adsorbent has extremely high heat resistance while highly suppressing a decrease in the adsorption amount of the adsorption target substance in the presence of water. From this point of view, the coverage rate of the shell may be 78% or more, 80% or more, 82% or more, 85% or more, 90% or more, or 95% or more, or 100%.

The coverage rate of the shell of the adsorbent of the present invention is defined as the proportion of the surface area of the adsorbent that is covered by the shell and has no exposed core. The coverage rate of the shell may be measured by methods known to those skilled in the art, such as, for example, XPS, FIB-SEM, or FT-IR. The method for measuring the coverage rate of the shell may be appropriately selected in accordance with the SiO₂/Al₂O₃ molar ratio of the core.

For example, when the SiO₂/Al₂O₃ molar ratio of the core is 5 or less, the coverage rate of the shell may be calculated from the results of XPS analysis measured for the adsorbent, taking into account the SiO₂/Al₂O₃ molar ratio of each of the core and the shell. When the SiO₂/Al₂O₃ molar ratio of the core exceeds 5, the coverage rate of the shell may be measured by FIB-SEM or FT-IR.

Measurement of the coverage rate of the shell by FIB-SEM may be performed, for example, by image analysis of an SEM image of a cross section of the adsorbent processed by FIB.

Measurement of the coverage rate of the shell by FT-IR may be performed, for example, by FT-IR measurement of the adsorbent which has adsorbed quinoline. In this case, since quinoline has a large molecular size and cannot be adsorbed into the pores of the core, but rather, only into the shell, the coverage rate of the shell can be calculated from the peak intensity of quinoline in FT-IR.

The shell proportion of the adsorbent of the present invention may be 15% by mass or more, 20% by mass or more, 25% by mass or more, or 30% by mass or more, and may be 50% by mass or less, 45% by mass or less, 40% by mass or less, or 35% by mass or less based on the total mass of the adsorbent. When the shell proportion is within this range, an adsorbent having extremely high heat resistance while the decrease in the adsorption amount of the adsorption target substance in the presence of water is highly suppressed can be achieved.

The shell proportion of the adsorbent of the present invention is defined as the ratio of the mass of the shell to the total mass of the adsorbent.

The thickness of the shell of the adsorbent of the present invention may be 100 nm or more, 120 nm or more, 150 nm or more, 170 nm or more, 200 nm or more, or 220 nm or more, and may be 1,000 nm or less, 500 nm or less, 400 nm or less, 300 nm or less, or 250 nm or less. When the thickness of the shell is within this range, an adsorbent having extremely high heat resistance while the decrease in the adsorption amount of the adsorption target substance in the presence of water is highly suppressed can be achieved. When the shell is excessively thick, it may become difficult for the adsorption target substance to pass therethrough, which may be undesirable.

The thickness of the shell of the adsorbent of the present invention may be measured as a number average value by electron microscopy observation.

### <Zeolite Structure Constituting Core and Zeolite Structure Constituting Shell Not Having Shared Composite Building Unit>

In the adsorbent of the present invention, it is necessary that the zeolite structure constituting the core and the zeolite structure constituting the shell not have a shared composite building unit.

Zeolites are constructed from a combination of basic structures referred to as "Composite Building Units" (CBUs), which are formed by linking together a plurality of TO4 units (several to several tens) which consist of four-coordinate Si or Al atoms and O atoms. A single type of zeolite may contain one or a plurality of types of CBUs.

For example, zeolites having skeletal structures FAU, AEI, CHA, BEA, and MFI are composed of the following CBUs:
FAU: d6r, sod (2 types)
AEI: d6r (1 type)
CHA: d6r, cha (2 types)
BEA: mor, bea, mtw (3 types)
MFI: mor, cas, mfi, mel (4 types)

For example, BEA and MFI have a composite building unit referred to as "mor" as the shared composite building unit. Thus, for example, a core-shell adsorbent in which the core is BEA and the shell is MFI does not correspond to the adsorbent of the present invention.

However, for example, FAU and MFI do not have a shared composite building unit. Thus, for example, a core-shell adsorbent in which the core is FAU and the shell is MFI corresponds to the adsorbent of the present invention as long as all other requirements are satisfied.

As verified in the Examples, which are described later, a core-shell adsorbent with a high CO₂ adsorption amount can be obtained using zeolites which do not have a shared composite building unit as the core and shell, respectively.

It is desirable that the core have a high CO2 adsorption amount and that the hydrophobicity of the shell be increased by increasing the SiO2/Al2O3 molar ratio of the shell.

In consideration of the foregoing, in the adsorbent of the present invention, the zeolite constituting the core may have a skeletal structure selected from FAU, AEI, and CHA, and the silicate-based oxide constituting the shell may have a skeletal structure of MFI.

### <Method for Measuring SiO₂/Al₂O₃ Molar Ratio of Core and Shell>

The SiO₂/Al₂O₃ molar ratio of the core and shell in the adsorbent of the present invention may be measured by, for example, scanning electron microscope-energy-dispersive X-ray spectroscopy (SEM-EDX) of a cross section of the adsorbent.

In SEM-EDX, first, an SEM analysis of a cross section of the adsorbent is performed, and the core part and the shell part of the adsorbent are defined based on the contrast of the resulting SEM image. Next, a virtual straight line is set in this SEM image so as to penetrate both the core part and the shell part. Subsequently, EDX line analysis is performed along the set virtual line to measure the Si and Al element concentrations (mass%) in each of the core part and the shell part.

From the obtained measurements, the SiO2/Al2O3 molar ratio of each of the core part and shell part can then be calculated.

### <<Method for Production of Adsorbent>>

The adsorbent of the present invention described above may be produced by any method as long as the adsorbent has the above-mentioned characteristics.

The adsorbent of the present invention may be produced by, for example, the following production method.

A method for the production of an adsorbent, comprising:
contacting a core composed of a zeolite and a silicate-based oxide composed of a silicate or an aluminosilicate having an SiO₂/Al₂O₃ molar ratio of 750 or more (contacting between core and silicate-based oxide);
depositing a seed shell composed of the silicate-based oxide on a surface of the core to synthesize an adsorbent precursor (adsorbent precursor synthesis); and
heating the adsorbent precursor in the presence of a silicate-based oxide source and an organic structure directing agent to grow crystals of the shell (shell crystal growth).

The obtained adsorbent may be used after firing if necessary.

The method for the production of an adsorbent of the present invention has the advantage of enabling the formation of a core-shell structure without considering the structural commonality between the zeolite constituting the shell and the zeolite constituting the core.

Hereinafter, the elements constituting the above adsorbent production method will be described in order.

### <Contact Between Core and Silicate-Based Oxide>

First, the core and the silicate-based oxide are brought into contact.

### (Core)

The core may be appropriately selected in accordance with the desired core of the adsorbent of the present invention. When the adsorption target substance is CO₂, a zeolite substituted with alkali cations may be used. The alkali cations may be, for example, alkali metal cations, alkaline earth metal cations, or ammonium cations. In such zeolites, since the alkali cations serve as chemical adsorption sites for CO₂, there is an advantage in that the adsorption amount of CO₂ is higher as compared to other cation substitutes that have only physical adsorption sites (for example, H-zeolite). The alkali cation may in particular be Na⁺.

The core for producing the adsorbent of the present invention may be one or more selected from, for example, AFI, ATO, BEA, CHA, CON, FAU, GME, LTA, LTL, MOR, MTW, AFX, AEI, MFI, or OFF having an SiO2/Al2O3 molar ratio of 0.5 or more and 10 or less and a particle diameter of 1.0 µm or more and 5.0 µm or less.

The core may be surface-modified with a polycation upon contact with the silicate-based compound. The polycation may be, for example, an ammonium polycation or a quaternary ammonium cation.

Polycationic surface modification of the core may be performed by, for example, contacting the core with a polycationizing agent. The polycationizing agent may be selected from, for example, poly(diallyldimethylammonium chloride) and alkylmethylamines.

The amount of the polycationizing agent used may be 0.5 parts by mass or more and 10 parts by mass or less based on 100 parts by mass of the core. The contacting of the core with the polycationizing agent may be carried out in, for example, water. The contact temperature may be appropriately selected from the range of 0°C or higher and 100°C or lower, but room temperature is sufficient.

### (Silicate-Based Oxide)

The silicate-based oxide is a component that is deposited on the surface of the core upon contact with the core and serves as a "seed shell." Thus, this silicate-based oxide may have the same skeletal structure as the desired shell of the adsorbent of the present invention. This silicate-based oxide may be, for example, an MFI silicate. The SiO₂/Al₂O₃ molar ratio of this silicate is arbitrary. Specifically, even if the SiO₂/Al₂O₃ molar ratio of the "seed shell" is different from the desired SiO₂/Al₂O₃ molar ratio of the shell of the adsorbent, the SiO₂/Al₂O₃ molar ratio of the shell of the adsorbent can be controlled to the desired value by changing the SiO₂/Al₂O₃ molar ratio of the silicate-based oxide source used for crystal growth of the shell.

The particle size of the silicate-based oxide may be, for example, 30 nm or more and 120 nm or less.

Silicate-based oxides may be synthesized by heating a suitable silicate-based oxide source in the presence of water. During the synthesis of the silicate-based oxide, an organic structure directing agent (OSDA) may be present.

The silicate-based oxide source used herein may be selected from any silicon source, such as orthosilicic acid, alkoxides of silicic acid, alkali metal salts of silicic acid, fumed silica, and colloidal silica. One or more types selected from these may be used. Specifically, the alkoxide of silicic acid may be, for example, tetraethyl orthosilicate, and the alkali metal salt of silicic acid may be, for example, sodium silicate.

When the shell of the desired adsorbent contains Al, the silicate oxide source may contain Al or a mixture of the silicate oxide source and an Al source may be used. Examples of silicate oxide sources containing Al include aluminosilicic acid, alkoxides of aluminosilicic acid, and alkali metal salts of aluminosilicic acid. Examples of the Al source include aluminate and Al(OiPr)3. The aluminate may be, for example, sodium aluminate.

When synthesizing the silicate-based oxide, an organic structure directing agent (OSDA) may optionally be present. As the OSDA, for example, one that can form an MFI structure may be selected. The OSDA may be specifically selected from, for example, alkylammonium hydroxide and 1,2,3-triethylimidazolium. The alkylammonium hydroxide may be selected from, for example, tetramethylammonium hydroxide, tetraethylammonium hydroxide, benzyltrimethylammonium hydroxide, N,N,N-trimethyladamantanammonium hydroxide, N,N-diethyl-2,6-dimethylpiperidinium hydroxide, and 1,4-bis(1-azabicyclo[2.2.2]octane)butyl hydroxide.

The amount of OSDA used may be 0.3 parts by mass or more, 15 parts by mass or more, or 30 parts by mass or more, based on 100 parts by mass of the silicate-based oxide source in terms of silica, and may be 680 parts by mass or less, 340 parts by mass or less, or 240 parts by mass or less.

When expressing the usage amount of OSDA in terms of molar ratio, the ratio of the number of moles of OSDA per mol of silicon atoms in the silicate-based oxide source (OSDA/Si) may be, for example, in the range of 0.1 or more and 0.7 or less.

The silicate-based oxide may be synthesized by heating the silicate-based oxide source as described above in the presence of water, in the presence of OSDA as needed. Synthesis of the silicate-based oxide may typically be performed in water.

The heating temperature when synthesizing the silicate-based oxide may be, for example, 50°C or higher and 175°C or lower, and the heating time may be, for example, 10 hours or longer and 300 hours or less.

### (Contact Conditions Between Core and Silicate-Based Oxide)

Contact between the core and the silicate-based oxide is performed in the presence of water. The contact between the core with the silicate-based oxide may typically be performed in water. In this case, the core and the silicate-based oxide are brought into contact with each other in the form of a mixture containing the core and the silicate-based oxide in water. Contact between the two in this manner is convenient because the resulting mixture can be directly used in the next step of "Adsorbent Precursor Synthesis (Seed Shell Deposition)."

The amount of the silicate-based oxide used may be, for example, 70 parts by mass or more, 100 parts by mass or more, or 200 parts by mass or more as a mass of the silicate-based oxide in terms of silica relative to 100 parts by mass of the core, and may be, for example, 10,000 parts by mass or less, 3,400 parts by mass or less, or 2,000 parts by mass or less.

### <Adsorbent Precursor Synthesis (Seed Shell Deposition)>

Next, a seed shell composed of the silicate-based oxide is deposited on the core to synthesize an adsorbent precursor.

The seed shell may be deposited onto the core by, for example, spray-drying a mixture of the core and the silicate-based oxide or heating a mixture of the core and the silicate-based oxide.

The mixture of the core and the silicate-based oxide may contain water. The mixture of the core and the silicate-based oxide containing water may be prepared by adding the core and the silicate-based oxide to water, or the mixture obtained when the core and the silicate-based oxide are brought into contact with each other in water may be used as-is.

Spray-drying of the mixture of the core and silicate-based oxide may be performed using a commercially available spray drying device at a predetermined flow rate and at a temperature of, for example, 100 to 300°C.

Heating of the mixture of the core and the silicate-based oxide may be performed at, for example, a temperature of 50°C or higher and 120°C or lower for, for example, 12 hours or longer and 150 hours or less.

### <Shell Crystal Growth>

The adsorbent precursor obtained above is then heated in the presence of a silicate-based oxide source and an organic structure directing agent to grow crystals of the shell.

### (Silicate-Based Oxide Source)

The silicate-based oxide source used for shell crystal growth may appropriately be selected from those exemplified above and used as a silicate-based oxide source for synthesizing the silicate-based oxide serving as the "seed shell."

The amount of the silicate-based oxide source to be used may be greater than 0 parts by mass, 0.1 parts by mass or more, 1 part by mass or more, or 5 parts by mass or more, as a mass of the silicate-based oxide source in terms of silica relative to 100 parts by mass of the adsorbent precursor, and may be 100 parts by mass or less, 50 parts by mass or less, or 25 parts by mass or less, and may be appropriately selected in accordance with the desired shell proportion.

### <Organic Structure Directing Agent>

The organic structure directing agent (OSDA) used for crystal growth of the shell may be appropriately selected from those exemplified above and used as the OSDA for synthesizing the silicate-based oxide serving as the "seed shell."

The amount of OSDA used may be 3 parts by mass or more, 20 parts by mass or more, or 30 parts by mass or more relative to 100 parts by mass of the adsorbent precursor, and may be 240 parts by mass or less, 120 parts by mass or less, 100 parts by mass or less, or 85 parts by mass or less.

### (Conditions for Shell Crystal Growth)

Shell crystal growth may be performed in the presence of water, and an alcohol may be present. Typically, the shell crystal growth is performed by heating in the form of a mixture containing the adsorbent precursor, the silicate-based oxide source, an organic structure directing agent, and an alcohol in water.

The alcohol has the function of making the silicate-based oxide source easily soluble in the solvent. As the alcohol, for example, ethanol or methanol can be used, and ethanol is preferable. The amount of the alcohol used may be greater than 0 parts by mass, 10 parts by mass or more, 75 parts by mass or more, or 150 parts by mass or more based on 100 parts by mass of the adsorbent precursor, and may be 15,000 parts by mass or less, 7,500 parts by mass or less, 4,000 parts by mass or less, or 3,000 parts by mass or less.

The heating temperature for crystal growth of the shell may be, for example, 80°C or higher, 100°C or higher, 120°C or higher, 150°C or higher, or 180°C or higher, and may be 300°C or lower, 250°C or lower, 200°C or lower, 180°C or lower, or 150°C or lower. The heating time for crystal growth of the shell may be, for example, 10 minutes or longer, 20 minutes or longer, 30 minutes or longer, 1 hour or longer, 2 hours or longer, 4 hours or longer, 6 hours or longer, 8 hours or longer, 12 hours or longer, or 24 hours or longer, and may be 72 hours or less, 48 hours or less, 36 hours or less, 24 hours or less, 12 hours or less, 8 hours or less, 6 hours or less, 4 hours or less, or 2 hours or less.

When the heating temperature is relatively high, the heating time may be relatively short, and when the heating time is relatively long, the heating temperature may be relatively low. For example, when the heating temperature is 80°C or higher and 150°C or lower, the heating time may be 6 hours or longer and 72 hours or less. For example, when the heating temperature is 180°C or higher and 300°C or lower, the heating time may be 10 minutes or longer and 2 hours or less.

### <Washing and Firing>

The adsorbent of the present invention can be obtained in the manner described above. The obtained adsorbent may be used after being washed and further fired, if necessary.

Washing may be performed with, for example, one or more solvents selected from water and organic solvents. In particular, washing with a water-soluble organic solvent or a mixed solvent containing water and a water-soluble organic solvent is preferable. The water-soluble organic solvent may be selected from, for example, methanol, ethanol, acetone, n-propanol, and i-propanol. This washing removes residual organic matter originating from the silicate-based oxide source and the OSDA.

The firing may be performed at, for example, a temperature of 400°C or higher and 800°C or lower for, for example, 1 hour or longer and 12 hours or less. The ambient atmosphere during firing may be air. This firing has the advantage that residual organic matter that could not be removed even by washing is burned off, and that the shell is affixed to the surface of the core.

### EXAMPLES

### I. Influence of Method for Production of Core-Shell Composite

In Examples 1 to 6 and Comparative Examples 1 to 4, the CO₂ adsorption amounts of core-shell FAU-MFI composites (adsorbents) produced by various methods were investigated. FAU has two types of composite building units (CBUs) of d6r and sod, and MFI has four types of composite building units of mor, cas, mfi, and mel.

### <<Example 1>>

In Example 1, MFI was deposited on an FAU surface by spray drying.

### 1. Synthesis of Core-Shell FAU-MFI Composite

### (1) Pretreatment of FAU Core Surface (Synthesis of PDADMAC-modified Na-FAU)

100 g of Na-FAU (SiO₂/Al₂O₃ molar ratio = 2.2, Na/Al = 0.65 (mol ratio), particle size 2 to 3 µm) was added to 1,330 g of water, and ultrasonic waves were applied for 2 hours. 5.6 g of a PDADMAC (poly(diallyldimethylammonium chloride)) aqueous solution (35% by mass, manufactured by Sigma-Aldrich) was added thereto and stirred to modify the FAU surface with PDADMAC. Thereafter, the solid content was collected by centrifugation to obtain PDADMAC-modified Na-FAU.

### (2) Synthesis of Nano-MFI Shell

180 g of a TEOS (tetraethyl orthosilicate) aqueous solution (a concentration of 28% by mass in terms of SiO₂, manufactured by Tokyo Chemical Industry Co., Ltd.) and 100 g of a TPAOH (tetrapropylammonium hydroxide) aqueous solution (40% by mass, manufactured by SACHEM, Inc.) as an organic structure directing agent (OSDA) were added to 100 g of water and mixed, and the mixture was maintained at 80°C for 96 hours while stirring to perform hydrothermal synthesis to obtain a dispersion containing the seed shell (MFI silicate).

### (3) Deposition of MFI on FAU Surface (Synthesis of Core-Shell FAU-MFI Composite Precursor)

The PDADMAC-modified Na-FAU obtained in "(1) Pretreatment of FAU Core Surface" was added to the dispersion containing the nano-MFI shell obtained in "(2) Synthesis of Nano-MFI Shell" to obtain a mixture. While stirring this mixture, spray drying was performed using a laboratory spray dryer (manufactured by Okawara MFG. Co., Ltd.) at a flow rate of 18 mL/min and a temperature of 200°C to deposit the seed shell on the surface of the core. The obtained powder was collected to obtain a core-shell FAU-MFI composite precursor. The ratio between the mass of FAU and the mass of TEOS in terms of SiO₂ in the mixture was set to 2.08.

### (4) Crystal Growth of MFI Shell (Synthesis of Core-Shell FAU-MFI Composite)

8 g of a TEOS aqueous solution, 1.3 g of a TPAOH aqueous solution, and 33 g of ethanol were added to 143 g of water and stirred thoroughly to obtain an MFI shell precursor solution. Thereto, 10 g of the core-shell FAU-MFI composite precursor obtained in "(3) Deposition of MFI on FAU Surface" was added, followed by sealing in a container. This container was carried into an autoclave and held at 135°C for 24 hours while rotating at a rotation speed of 20 rpm to perform hydrothermal synthesis and grow shell crystals.

Next, the solid content in the reaction mixture was collected by centrifugation at a rotation speed of 300 rpm, and washed with water and acetone in this order. These washings were carried out by adding twice the mass of water or acetone to the solid content, stirring for 15 minutes, and then centrifuging for 30 minutes. Next, the washed solid content was collected, dried at 100°C for 10 hours, and further fired at 550°C for 5 hours to obtain a core-shell FAU-MFI composite (adsorbent). The shell of the obtained core-shell FAU-MFI composite did not contain any Al atoms, and thus, the SiO2/Al2O3 molar ratio of the shell was ∞ (infinity).

### (5) Analysis

### (5-1) Measurement of Shell Proportion

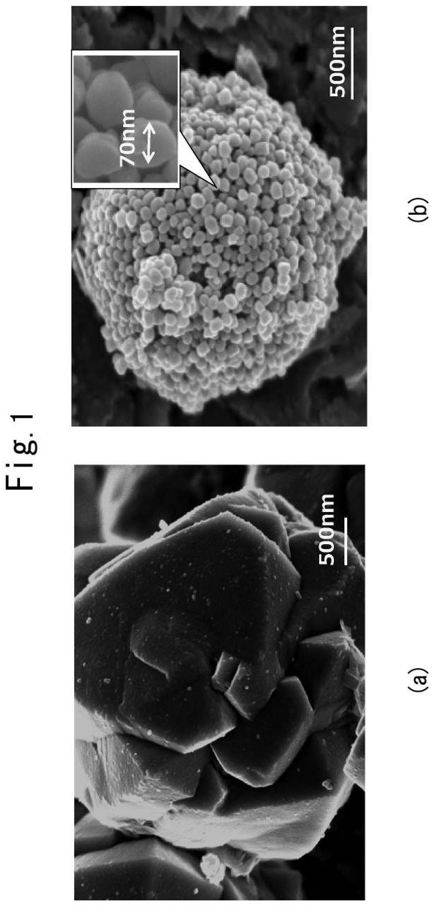

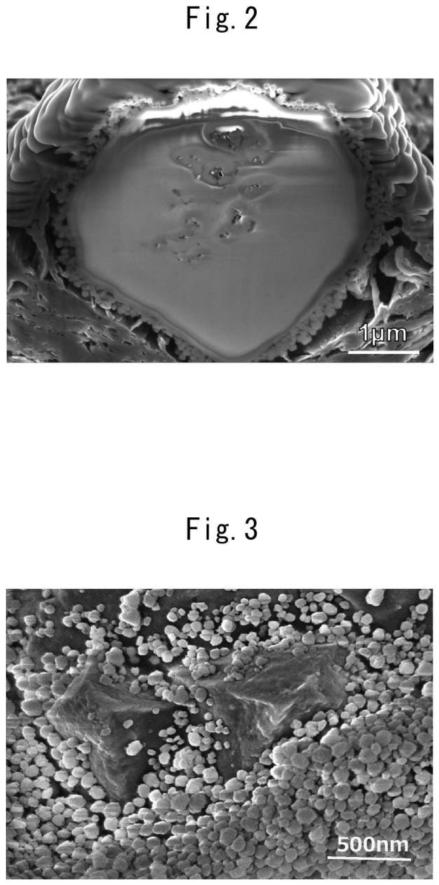

The raw material Na-FAU and the core-shell FAU-MFI composite obtained above were observed using a field emission scanning electron microscope (FE-SEM). FE-SEM images of the Na-FAU and the core-shell FAU-MFI composite are shown in FIG. 1(a) and FIG. 1(b), respectively. An SEM image of the cross section of the core-shell FAU-MFI composite obtained above is shown in FIG. 2.

This SEM image was captured after exposing a cross section of a sample of the core-shell FAU-MFI composite powder using Focused Ion Beam (FIB) processing. The FIB processing conditions were as follows:
Pretreatment: After applying carbon paste to an aluminum sample stage, the core-shell FAU-MFI composite powder was sprinkled onto the carbon paste, and osmium (Os) deposition was then performed for 5 seconds.
Protective film: C deposition
Rough processing conditions: Acceleration voltage 30 kV, irradiation current 1.2 nA
Cleaning conditions: Acceleration voltage 30 kV (constant), irradiation current 0.75 nA → 0.26 nA → 41 pA (decreased stepwise).

X-ray fluorescence (XRF) analysis and X-ray photoelectron spectroscopy (XPS) analysis were performed on each of the raw material FAU and the core-shell FAU-MFI composite, and by taking advantage of the fact that the shell did not contain Al atoms, the shell proportion and shell coverage rate in the composite were measured. FT-IR analysis of the core-shell FAU-MFI composite was performed.

The shell proportion of the core-shell FAU-MFI composite was calculated using the following formula. 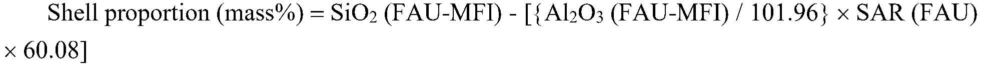 Shell proportion (mass%) = SiO2 (FAU-MFI) - [{Al2O3 (FAU-MFI) / 101.96} × SAR (FAU) × 60.08]

The abbreviations in the above formula have the following meanings:
SiO₂ (FAU-MFI): Silica content (mass%) in the core-shell FAU-MFI composite determined by XRF quantitative analysis
Al₂O₃ (FAU-MFI): Alumina content (mass%) in the core-shell FAU-MFI composite determined by XRF quantitative analysis
SAR (FAU): SiO₂/Al₂O₃ molar ratio of raw material FAU core
101.96 and 60.08 are the formula weights of Al₂O₃ and SiO₂, respectively.

### (5-2) Measurement of Coverage Rate of Shell

The coverage rate of the shell was determined from XPS analysis as follows. First, the raw material FAU and the obtained core-shell FAU-MFI composite were each subjected to XPS analysis, and the amount of Al exposed on the surface of each sample was investigated as the area of the Al2p peak (Al peak area) (λ = 74 eV). Next, the coverage rate of the shell was calculated from the obtained Al peak areas using the following formula. 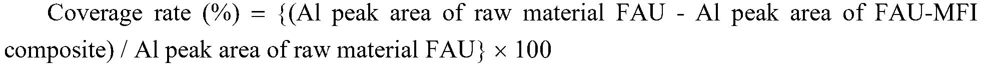 Coverage rate (%) = {(Al peak area of raw material FAU - Al peak area of FAU-MFI composite) / Al peak area of raw material FAU} × 100

In the FT-IR of the core-shell FAU-MFI composite, the ratio (I_{Si-OH}/I_{Si-O}) of the peak intensity I_{Si-OH} of the Si-OH peak ((3,788 ± 50) cm⁻¹) to the peak intensity I_{Si-O} of the Si-O peak ((1,868 ± 70) cm⁻¹) of the MFI skeleton was determined. It is considered that the smaller the peak intensity ratio (I_{Si-OH}/I_{Si-O}), the smaller the proportion of Si-OH present, and thus, the smaller the amount of defects in the shell.

The FT-IR measurement was performed according to the following procedure in accordance with JIS K0117:2017 (General Rules for Infrared Spectrophotometric Analysis).

The zeolite sample obtained in each Example or Comparative Example was pulverized in a mortar. 10 mg of the pulverized material was compression molded under a pressure of 10 MPa to prepare a disk sample having a diameter of 10 mm. FT-IR measurement of the obtained disk sample was conducted under the following conditions.
Measurement device: Fourier transform infrared spectrophotometer "FT/IR-6600" manufactured by JASCO Corporation
Measurement method: transmission method
Measurement wavelength range: 4,000 to 1,000 cm⁻¹
Resolution: 4 cm⁻¹
Detector: Mid-band cadmium mercury telluride (MCT) detector
Accumulated number of times: 64 repetitions
Measurement temperature: 500°C
Measurement atmosphere: under 20 volume% O₂/N₂ flow

The spectrum of zeolite was measured using the following method. The measurement was carried out under the same conditions as above, except that a disk sample prepared in the same manner as above was loaded into the sample chamber of the measuring device, the temperature was raised from room temperature to 500°C at a heating rate of 20°C/min under a 20 volume% O2/N2 flow, and the temperature was held at 500°C for 30 minutes.

### (5-3) Measurement of SiO₂/Al₂O₃ Molar Ratio of Core and Shell

The SiO₂/Al₂O₃ molar ratio of the core and the shell of the core-shell FAU-MFI composite was measured by SEM-EDX.

The following measurement device was used for the SEM-EDX measurement:
Measurement device: dual-beam scanning electron microscope, model name "Helios G4UX (FIB-SEM)" manufactured by Thermo Fisher
SEM: 5 kV/0.1 nA, WD 4 mm, Dwelltime 200 ns, Resolution 1536×1024 pixels
EDS: 10 kV, 0.8 nA, Dwelltime 150 µs, 40 accumulations, resolution 512 pixels (Map analysis)

Measurement was specifically carried out as follows:
First, SEM analysis of the core-shell FAU-MFI composite powder whose cross section had been exposed in the same manner as in "(5-1) Measurement of Shell Proportion" was performed to obtain an SEM image. In the obtained SEM image, the core part and shell part of the adsorbent were defined based on the image contrast. A single virtual line was set so as to penetrate both the core part and the shell part.
Next, EDX line analysis was performed along the set virtual straight line to measure the Si and Al element concentrations (mass%) in each of the core part and the shell part.

From the obtained measurements, the SiO₂/Al₂O₃ molar ratio of each of the core part and shell part was then calculated.

### (6) Evaluation of CO₂ Adsorption Amount

Approximately 0.1 g of the core-shell FAU-MFI composite was accurately weighed, placed in a sample tube of a catalyst analyzer "BELCAT II" (normal pressure flow type) manufactured by Microtrac BELL Co., Ltd., and the CO₂ adsorption amount was calculated from the difference between a sample and a blank in the area of the CO₂ adsorption breakthrough curve. The measurement was performed according to the following procedure.
Heating: the temperature was raised from room temperature to 400°C at a heating rate of 10°C/min in a He gas flow at a flow rate of 30 mL/min
Isothermal treatment: a temperature of 400°C was maintained for 30 minutes in a He gas flow at a flow rate of 30 mL/min
Cooling: the temperature was reduced from 400°C to 50°C at a cooling rate of 20°C/min in a 30 mL/min He flow
Measurement of adsorption breakthrough curve: a CO₂ adsorption breakthrough curve was measured by flowing a CO₂-containing model gas at a flow rate of 5 mL/min while maintaining a temperature of 50°C

The composition of the CO₂-containing model gas is as follows.
CO₂: 16% by volume
H₂O: 3% by volume
He: Balance

For the calculation of the CO₂ adsorption amount, the difference between a sample and a blank in the cumulative area of the CO₂ adsorption breakthrough curve from the time when the CO₂-containing model gas started flowing until 15 minutes later was obtained and divided for the calculation by the mass of the FAU core in the sample. The mass of the FAU core in the sample was determined by the mass of the sample (g) × (100 - shell proportion (%)).

The results are shown in Table 1. In Table 1, regarding the SiO₂/Al₂O₃ molar ratio of the shell, both the theoretical values based on the initial charge and the measured values using the method described above are shown. The theoretical value of the SiO₂/Al₂O₃ molar ratio of the shell in Example 1 was ∞ (infinity).

### <<Example 2>>

In Example 2, a core-shell FAU-MFI composite was synthesized in the same manner as in Example 1, except that the conditions for crystal growth of the shell of "(4) Crystal Growth of MFI Shell" were changed to 200°C for 30 minutes, and various evaluations were then performed.

### <<Example 3>>

In Example 3, MFI was deposited on an FAU surface by hydrothermal synthesis.

A core-shell FAU-MFI composite was synthesized in the same manner as in Example 1, except that in "(3) Deposition of MFI on FAU Surface", MFI was deposited on the FAU surface by hydrothermal synthesis, in place of spray drying, in accordance with the following procedure, and the various evaluations were performed.

MFI was deposited onto the FAU surface by hydrothermal synthesis using the following procedure.

The PDADMAC-modified Na-FAU obtained in "(1) Pretreatment of FAU Core Surface" was added to the dispersion containing the nano-MFI shell obtained in "(2) Synthesis of Nano-MFI Shell" to obtain a mixture. This mixture was sealed in a container, carried into an autoclave, and allowed to stand at 80°C for 24 hours to perform hydrothermal synthesis. The ratio between the mass of FAU and the mass of TEOS in terms of SiO2 in the mixture was set to 2.08.

The solid content in the reaction mixture was collected by centrifugation at a rotation speed of 300 rpm, and washed with water and acetone in this order. These washings were carried out by adding twice the mass of water or acetone to the solid content, stirring for 15 minutes, and then centrifuging for 30 minutes. Next, the washed solid content was dried at 100°C for 12 hours to obtain a core-shell FAU-MFI composite precursor.

### <<Example 4>>

In Example 4, a core-shell FAU-MFI composite was synthesized in the same manner as in Example 3, except that the conditions for crystal growth of the shell of "(4) Crystal Growth of MFI Shell" were changed to 200°C and 30 minutes, and various evaluations were then performed.

### <<Example 5>>

In Example 5, MFI was deposited on the FAU surface by spray drying twice.

"(1) Pretreatment of FAU Core Surface", "(2) Synthesis of Nano-MFI Shell," and "(3) Deposition of MFI on FAU Surface" were carried out in the same manner as in Example 1 to obtain an intermediate of the core-shell FAU-MFI composite precursor. Next, "(1) Pretreatment of FAU Core Surface", "(2) Synthesis of Nano-MFI Shell", and "(3) Deposition of MFI on FAU Surface" were carried out again by the same procedure, except that the obtained intermediate of the core-shell FAU-MFI composite precursor was used in place of Na-FAU, to obtain a core-shell FAU-MFI composite precursor.

By using the core-shell FAU-MFI composite precursor obtained above and performing "(4) Crystal Growth of MFI Shell" in the same manner as in Example 1, a core-shell FAU-MFI composite was synthesized, and the various evaluations were performed.

### <<Example 6>>

In Example 6, MFI was deposited on the FAU surface by hydrothermal synthesis twice.

"(1) Pretreatment of FAU Core Surface", "(2) Synthesis of Nano-MFI Shell," and "(3) Deposition of MFI on FAU Surface" were performed in the same manner as in Example 3 to obtain an intermediate of the core-shell FAU-MFI composite precursor. The supernatant liquid of the centrifugation performed when collecting the solid content from the reaction mixture obtained in "(3) Deposition of MFI on FAU Surface" was kept.

The obtained intermediate of the core-shell FAU-MFI composite precursor was dried at 100°C for 12 hours.

Next, "(1) Pretreatment of FAU Core Surface" was performed again by the same procedure, except that the dried intermediate of the core-shell FAU-MFI composite precursor obtained above was used in place of Na-FAU.

"(3) Deposition of MFI on FAU Surface" was performed again in the same manner as in Example 1, except that the pretreated intermediate obtained above was used in place of the PDADMAC-modified Na-FAU, and the supernatant liquid from the centrifugation kept as described above was used in place of the MFI shell precursor solution, to obtain a core-shell FAU-MFI composite precursor. A core-shell FAU-MFI composite was synthesized by performing "(4) Crystal Growth of MFI Shell" in the same manner as in Example 1 except that the obtained core-shell FAU-MFI composite precursor was used, and the various evaluations were performed.

### <<Comparative Example 1>>

In Comparative Example 1, a core-shell FAU-MFI composite precursor obtained by spray drying in the same manner as in Example 1 without performing "(4) Crystal Growth of MFI Shell" was subjected as-is to the various evaluations.

An FE-SEM image of the core-shell FAU-MFI composite precursor obtained in Comparative Example 1 is shown in FIG. 3.

### <<Comparative Example 2>>

In Comparative Example 2, a core-shell FAU-MFI composite precursor obtained by hydrothermal synthesis in the same manner as in Example 2 without performing "(4) Crystal Growth of MFI Shell" was subjected as-is to the various evaluations.

### <<Comparative Example 3>>

Comparative Example 3 was carried out in the same manner as Comparative Example 2 except that the hydrothermal synthesis temperature was changed. Specifically, synthesis of a core-shell FAU-MFI composite precursor was attempted in the same manner as in Example 2, except that the autoclave temperature in the hydrothermal synthesis during "(3) Deposition of MFI on FAU Surface" was set to 135°C, and the precursor was subjected as-is to the various evaluations without performing "(4) Crystal Growth of MFI Shell" on the obtained product.

Since the product obtained in Comparative Example 3 did not have a core-shell structure, "(6) Evaluation of CO₂ Adsorption Amount" was not performed. It is presumed that the product obtained in Comparative Example 3 did not have a core-shell structure because there were parts where the silicate particles in the shell aggregated and the silicate in the shell grew into crystals with a size of several µm.

Although the value "7.3" is listed in the "Ratio (I_{Si-OH}/I_{Si-O})" column, it is presumed that this is because the Si-OH in the core was detected in the FT-IR analysis.

### <<Comparative Example 4>>

In Comparative Example 4, a core-shell FAU-MFI composite precursor obtained by spray drying four times was subjected as-is to the various evaluations without performing "(4) Crystal Growth of MFI Shell". Specifically, a sample was prepared according to the following procedure.

"(1) Pretreatment of FAU Core Surface", "(2) Synthesis of Nano-MFI Shell," and "(3) Deposition of MFI on FAU Surface" were carried out in the same manner as in Example 1 to obtain an intermediate (1) of the core-shell FAU-MFI composite precursor. Next, "(1) Pretreatment of FAU Core Surface", "(2) Synthesis of Nano-MFI Shell," and "(3) Deposition of MFI on FAU Surface" were carried out again by the same procedure, except that the obtained intermediate (1) of the core-shell FAU-MFI composite precursor was used in place of Na-FAU, to obtain an intermediate (2) of the core-shell FAU-MFI composite precursor. A core-shell FAU-MFI composite precursor was obtained by repeating the same cycle and performing spray drying a total of four times.

The obtained core-shell FAU-MFI composite precursor was subjected as-is to the various evaluations without performing "(4) Crystal Growth of MFI Shell."

All the above results are shown in Table 1.

**[Table 1]**

| | Core | | Seed shell deposition | | | | Shell crystal growth | | Shell | | | | | CO₂ Adsorption amt (mmol /g-core) |
|---|---|---|---|---|---|---|---|---|---|---|---|---|---|---|
| | | | | | | | | | Proportion (mass%) | SAR*) | | Coverage rate (%) | Ratio (ISi-OH/^{I}Si-O) | |
| | Crystal structure | SAR*) | Shell type | Method | Temp | Reps | Temp | Time | | Theoretical | Actual | | | |
| Ex 1 | FAU | 2.2 | MFI silicate | Spray drying | 200°C | One | 135°C | 24 hours | 30.0 | ∞ | >5000 | 77 | 2.20 | 1.91 |
| Ex 2 | FAU | 2.2 | MFI silicate | Spray drying | 200°C | One | 200°C | 30 mins | 31.3 | ∞ | >5000 | 80 | 2.00 | 1.95 |
| Ex 3 | FAU | 2.2 | MFI silicate | Hydrothermal synthesis | 80°C | One | 135°C | 24 hours | 29.2 | ∞ | >5000 | 78 | 2.72 | 1.98 |
| Ex 4 | FAU | 2.2 | MFI silicate | Hydrothermal synthesis | 80°C | One | 200°C | 30 mins | 30.5 | ∞ | >5000 | 80 | 2.70 | 1.78 |
| Ex 5 | FAU | 2.2 | MFI silicate | Spray drying | 200°C | Two | 135°C | 24 hours | 32.0 | ∞ | >5000 | 82 | 1.90 | 2.10 |
| Ex 6 | FAU | 2.2 | MFI silicate | Hydrothermal synthesis | 80°C | Two | 135°C | 24 hours | 33.4 | ∞ | >5000 | 89 | 1.60 | 1.93 |
| Comp Ex 1 | FAU | 2.2 | MFI silicate | Spray drying | 200°C | One | - | - | 25.6 | ∞ | >5000 | 61 | 4.54 | 1.62 |
| Comp Ex 2 | FAU | 2.2 | MFI silicate | Hydrothermal synthesis | 80°C | One | - | - | 27.0 | ∞ | >5000 | 69 | 3.10 | 1.68 |
| Comp Ex 3 | FAU | 2.2 | (MFI silicate)**) | Hydrothermal synthesis | 135°C | One | - | - | 25.0 | - | - | - | 7.30 ***) | - |
| Comp Ex 4 | FAU | 2.2 | MFI silicate | Spray drying | 200°C | Four | - | - | 49.8 | ∞ | >5000 | 97 | 4.56 | 1.72 |

| | | | | | | | | | | | | | | |
|---|---|---|---|---|---|---|---|---|---|---|---|---|---|---|
| *) "SAR" refers to the SiO₂/Al₂O₃ molar ratio **) In Comp Ex 3, no core-shell structure was formed ***) It is presumed that in Comp Ex 3, the SiOH in the core was detected | | | | | | | | | | | | | | |

As shown in Table 1, the adsorbents of the Comparative Examples, in which crystal growth of the shell was not performed, exhibited insufficient CO₂ adsorption amounts. In contrast, the adsorbents of the Examples, in which crystal growth of the shell was properly performed and the predetermined core-shell structure was formed, exhibited sufficiently large CO₂ adsorption amounts.

### <<Evaluation of Hydrophobicity>>

The changes in the water adsorption rates over time of the Na-FAU (FAU core) used as the core in the Examples and Comparative Examples above and the FAU-MFI composites obtained in Examples 1 and 3 and Comparative Examples 1 and 2 were investigated under the following conditions.
Pretreatment: under nitrogen gas flow, the temperature was raised to 400°C at a heating rate of 20°C/min. After reaching 400°C, the temperature was maintained for 60 minutes, then allowed to cool to 200°C.
Measurement: FT-IR measurement was carried out every 5 seconds while flowing a hydrous nitrogen gas flow at 200°C.
Composition of hydrous nitrogen gas flow: water (water vapor) 1.5% by volume, nitrogen balance
Flow rate of hydrous nitrogen gas flow: 200 mL/min

Using the peak area of the peak around 1,655 cm⁻¹ derived from the displacement vibration of OH as an index of the water adsorption amount, the ratio of the peak area at each measurement time to the peak area at the time of saturated adsorption is determined, and this is used as the water adsorption rate. The value when the peak area did not change even when measurements were continued under a hydrous nitrogen gas flow was adopted as the peak area at the time of saturated adsorption.

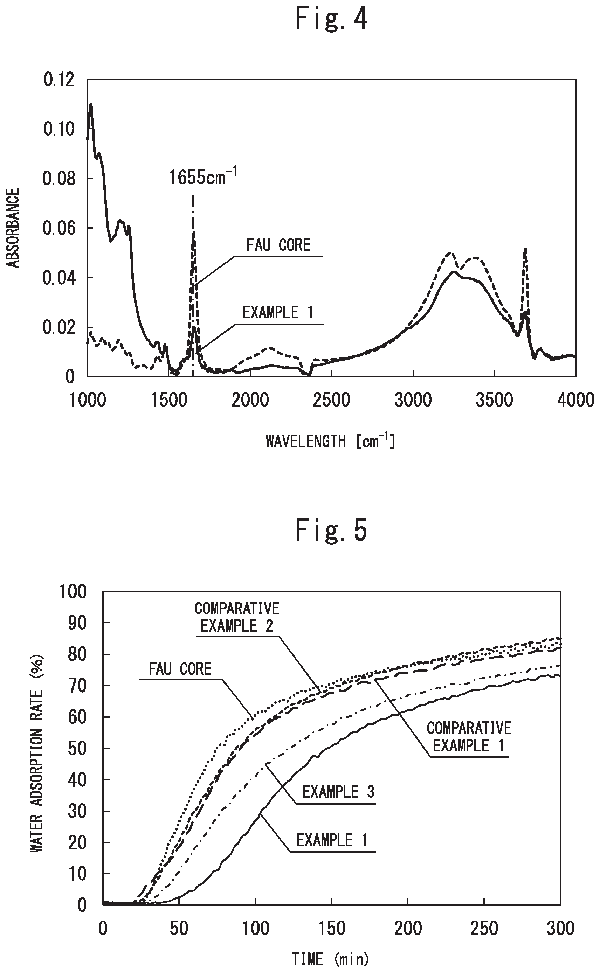

FIG. 4 shows an FT-IR chart measured for the FAU core and the sample of Example 1 60 seconds after the start of the flow of the hydrous nitrogen gas flow. FIG. 5 shows the change over time in the water adsorption rate of each sample. In FIG. 5, a sample having a line which is more on the right side has a slower water adsorption rate and thus higher hydrophobicity.

Referring to Table 1, the following is understood.

The shell proportion and coverage rate are substantially proportional to each other except for Comparative Example 3.

It was confirmed that the CO₂ adsorption amount was large when the coverage rate was 75% or more and the ratio (I_{Si-OH}/I_{Si-O}) was 3.0 or less.

In the sample of Comparative Example 4, the CO₂ adsorption amount was insufficient even though the coverage rate was 97%. This is considered to be because the value of the ratio (I_{Si'-OH}/I_{Si-O}) was high, exceeding 3.0. Specifically, in the sample of Comparative Example 4, since the value of the ratio (I_{Si-OH}/I_{Si-O}) was high, it is considered that there were many defects in the shell. This is presumed to be because shell aggregation was likely to occur, and CO₂ was prevented from passing through the shell and reaching the FAU core.

In FIG. 5, the lines of the change in water adsorption rate over time for the samples of Examples 1 and 3 are more on the right side than the lines for the samples of Comparative Examples 1 and 2. This indicates that the samples of Examples 1 and 3 had higher hydrophobicity than the samples of Comparative Examples 1 and 2.

Comparing the results in FIG. 5 and the results in Table 1, it is understood that the CO₂ adsorption amount of the FAU-MFI composite is correlated with the hydrophobicity thereof. Specifically, it is considered that the FAU-MFI composites of Comparative Examples 1 and 2 had low hydrophobicity, and the CO₂ adsorption sites were poisoned by water, thereby preventing CO₂ adsorption. In contrast, it is considered that the FAU-MFI composites of Examples 1 and 3 had high hydrophobicity, and the CO₂ adsorption sites were not poisoned by water and were vacant, whereby a high CO₂ adsorption amount was exhibited.

However, the present invention is not bound by a specific theory.

### II. Influence of Shared Composite Building Unit

The CO₂ adsorption amounts of the core-shell composite (adsorbent) obtained in Example 1 and the adsorbents of Comparative Examples 5 and 6 below were compared to investigate the influence of the composite building unit (CBU) shared between the zeolites constituting the core and shell, respectively.

### <<Comparative Example 5>>

Commercially available Na-BEA (SiO₂/Al₂O₃ molar ratio = 50, Na/Al = 0.65 (mol ratio), particle size 2 to 3 µm) was used as-is as the adsorbent of Comparative Example 5, and the CO₂ adsorption amount was measured in the same manner as in Example 1.

BEA has three types of composite building units (CBUs): mor, d4r, and mtw.

### <<Comparative Example 6>>

A core-shell BEA-MFI composite (adsorbent) was obtained in the same manner as in Example 1, except that in place of the FAU core in "1. Synthesis of Core-Shell FAU-MFI Composite," the same Na-BEA as used in Comparative Example 5 was used. The shell proportion of the obtained BEA-MFI composite was measured using the same method as in Example 1 and was 30% by mass.

MFI has four types of CBUs: mor, cas, mfi, and mel.

Table 2 shows the CO₂ adsorption amounts of the above adsorbents.

**[Table 2]**

| | Core | | Shell | | Shell proportion (mass%) | CO2 adsorption amount (mmol/g-core) |
|---|---|---|---|---|---|---|
| | Crystal type | CBU | Crystal type | CBU | | |
| Ex 1 | FAU | d6r, sod | MFI | mor, cas, mfi, mel | 30.0 | 1.98 |
| Comp Ex 5 | BEA | mor, d4r, mtw | - | - | - | 0.11 |
| Comp Ex 6 | BEA | mor, d4r, mtw | MFI | mor, cas, mfi, mel | 30.0 | 0.35 |

In the core-shell BEA-MFI composite of Comparative Example 6, the BEA constituting the core and the MFI constituting the shell both have "mor" as a shared CBU. The adsorbent of Comparative Example 6 exhibited only a slight improvement in CO₂ adsorption amount as compared to the adsorbent of Comparative Example 5, which did not have a shell.

In contrast, in the core-shell FAU-MFI composite of Example 1, the FAU constituting the core and the MFI constituting the shell do not have a shared CBU. The adsorbent of Example 1 had an extremely large CO₂ adsorption amount.

In light of the foregoing, it is verified that in the adsorbent of the present invention, since the structure of the zeolite constituting the core and the structure of the zeolite constituting the shell do not have a shared composite building unit, the CO₂ adsorption amount is significantly improved.

## Claims

1. An adsorbent having a core-shell structure, wherein
the core is composed of a zeolite, and
the shell satisfies all of the following requirements (A) to (C): the shell
(A) being a silicate-based oxide composed of a silicate or an aluminosilicate having an SiO₂/Al₂O₃ molar ratio of 750 or more;
(B) having a zeolite structure; and
(C) having a ratio (I_{Si-OH}/I_{Si-O}) of a peak intensity I_{Si-OH} of an Si-OH peak ((3,788 ± 50) cm⁻¹) to a peak intensity I_{Si-O} of an Si-O peak ((1,868 ± 70) cm⁻¹) of 3.0 or less in FT-IR of the adsorbent, and
a structure of the zeolite constituting the core and a structure of the zeolite constituting the shell do not have a shared composite building unit.

2. The adsorbent according to claim 1, wherein the zeolite constituting the core has an SiO₂/Al₂O₃ molar ratio of 20 or less.

3. The adsorbent according to claim 1 or 2, wherein the zeolite constituting the core has a skeletal structure selected from FAU, AEI, and CHA.

4. The adsorbent according to any one of claims 1 to 3, wherein an adsorption target substance of the adsorbent is CO₂.

5. The adsorbent according to any one of claims 1 to 4, wherein an alkali metal or an alkaline earth metal is supported on the zeolite constituting the core.

6. The adsorbent according to any one of claims 1 to 5, wherein the silicate-based oxide constituting the shell has an MFI skeletal structure.

7. The adsorbent according to any one of claims 1 to 6, wherein a coverage rate of the shell is 75% or more.

8. A method for the production of the adsorbent according to any one of claims 1 to 7, the method comprising the steps of:
contacting a core composed of a zeolite and a silicate-based oxide composed of a silicate or an aluminosilicate having an SiO₂/Al₂O₃ molar ratio of 750 or more;
depositing a seed shell composed of the silicate-based oxide on a surface of the core to synthesize an adsorbent precursor; and
heating the adsorbent precursor in the presence of a silicate-based oxide source and an organic structure directing agent to grow crystals of the shell.

9. The method for the production of an adsorbent according to claim 8, wherein the synthesis of the adsorbent precursor is performed by spray drying a mixture of the core and the silicate-based oxide.

10. The method for the production of an adsorbent according to claim 8, wherein the synthesis of the adsorbent precursor is performed by heating a mixture of the core and the silicate-based oxide.
